# EUROPÄISCHE PATENTANMELDUNG

(11) **EP 4 542 097 A1**
(43) Veröffentlichungstag der Anmeldung: **23.04.2025**
(21) Anmeldenummer: 23204018.8
(22) Anmeldetag: 17.10.2023
(51) Int. Cl.: F16L 19/02

(54) **ROHRVERSCHRAUBUNG**

(71) Anmelder: M + S Armaturen GmbH, 26446 Friedeburg (DE)
(72) Erfinder: Bariz, Arthur-Wilhelm, 26639 Wiesmoor (DE); Saathof-Kettwig, Günter, 26835 Hesel (DE)
(74) Vertreter: Jabbusch, Matthias

(57) **Zusammenfassung**

Die Erfindung betrifft eine Rohrverschraubung, insbesondere für Lebensmittel- und Chemieanwendungen, mit einem einen ersten Rohrabschnitt 1a bildenden Gewindestutzen 1 und einem einen zweiten Rohrabschnitt 2a bildenden Kegelstutzen 2, wobei die Rohrabschnitte 1a, 2a mit deren freien Enden 1b, 2b bestimmungsgemäß fluchtend zueinander ausgerichtet sind. Der Gewindestutzen 1 weist an seinem freien Ende eine flanschartige Verbreiterung 3 auf, die einen stirnseitig entlang ihres Umfangs, gegenüber dem freien Ende des Rohrabschnitts 1b des Gewindestutzens 1 vorkragenden Rohrverbindungsabschnitt 4 ausbildet. Der Rohrverbindungsabschnitt 4 weist innenseitig eine Kegelstutzenführungsfläche 7 auf und die flanschartige Verbreiterung 3 ist außenseitig mit einem Außengewinde 9 versehen. Der Kegelstutzen 2 weist an seinem freien Ende einen Flansch 16 mit sich in Richtung des freien Endes 2b des Rohrabschnitts 2a des Kegelstutzen 2 konisch verjüngender Anlagefläche 17 auf. Den Flansch 16 des Kegelstutzen hintergreift eine Überwurfmutter 11, die ein mit dem Außengewinde 9 des Gewindestutzens 1 in Eingriff bringbares Innengewinde 10 aufweist, und sich gegen einen zwischen dem vorkragenden Rohrverbindungsabschnitt 4 und einer dem freien Ende 1b des Rohrabschnitts 1a zugewandten Anschlagfläche 14 der Überwurfmutter 11 angeordneten Abstandshalter 12 abstützt.

## Beschreibung

Die Erfindung betrifft eine Rohrverschraubung, insbesondere für Lebensmittel- und Chemieanwendungen, insbesondere nach DIN 11851, mit einem einen ersten Rohrabschnitt bildenden Gewindestutzen und einem einen zweiten Rohrabschnitt bildenden Kegelstutzen, bei dem die Rohrabschnitte mit deren freien Enden bestimmungsgemäß fluchtend zueinander ausgerichtet sind, bei dem der Gewindestutzen an seinem freien Ende eine flanschartige Verbreiterung aufweist, die flanschartige Verbreiterung einen stirnseitig entlang ihres Umfangs, insbesondere entlang ihres äußeren Umfangs, gegenüber dem freien Ende des Rohrabschnitts des Gewindestutzens vorkragenden Rohrverbindungsabschnitt ausbildet, der Rohrverbindungsabschnitt der flanschartigen Verbreiterung innenseitig eine Kegelstutzenführungsfläche aufweist und die flanschartige Verbreiterung außenseitig mit einem Außengewinde versehen ist, bei dem der Kegelstutzen an seinem freien Ende einen Flansch mit sich in Richtung des freien Endes des Rohrabschnitts des Kegelstutzens konisch verjüngender Anlagefläche aufweist, mit einer den Flansch des Kegelstutzen hintergreifenden Überwurfmutter, die ein mit dem Außengewinde des Gewindestutzens in Eingriff bringbares Innengewinde aufweist, und mit wenigstens einer zwischen die freien Enden der Rohrabschnitte eingelegten, diese zueinander abdichtenden Dichtung.

Die Rohrverschraubung nach DIN 11851 ist auch als sogenannte Milchrohrverschraubung bekannt und wurde ursprünglich für die Verbindung von Milchschlauch und Milchrohr entwickelt. Die erfindungsgemäße Rohrverschraubung eignet sich somit natürlich auch, um zwei mit dem Gewinde- bzw. Kegelstutzen versehene Schlauchenden oder anderweitige Leitungen miteinander zu verbinden. Diese Rohrverschraubung weist zwischen dem Gewindestutzen und der Überwurfmutter weiterhin ein gut zu reinigendes Rundgewinde nach DIN 405 auf und hat sich mittlerweile bei vielen Anwendungen der Nahrungsmittelverarbeitung, bei Getränkeleitungssystemen, bei pharmazeutischen Produktionen und in der Chemie durchgesetzt. Gebräuchliche Werkstoffe und Materialien sind daher für metallische Teile nichtrostender Stahl, insbesondere V2A oder V4A. Für die Dichtung kommen je nach Einsatzzweck verschiedene Materialien in Frage, wie vor allem Perbunan, PTFE, Silicon oder Viton^{®}.

Ein Nachteil der klassischen Milchrohrverschraubung besteht darin, dass die eingelegte Dichtung beim Verbinden zweier Rohrabschnitte mit zu viel Kraft zusammengepresst wird und die gequetschte Dichtung dann in einen Strömungsquerschnitt der fluchtend zueinander ausgerichteten Rohre hineinragt. Dies kann dazu führen, dass sich an der Dichtung Ablagerungen ansammeln, welche zu einer Verunreinigung und möglicherweise auch zu einer Beeinträchtigung der Produktion bzw. Produktqualität führen.

Aufgabe der Erfindung ist es eine entsprechende Rohrverschraubung, insbesondere eine sogenannte Milchrohrverschraubung, dahingehend weiter zu entwickeln, dass einem zu starken Zusammenpressen der Dichtung entgegengewirkt wird, so dass diese nicht mehr in den Strömungsquerschnitt der miteinander verbundenen Rohrabschnitte hineinragen kann.

Die Lösung dieser Aufgabe erfolgt mit den Merkmalen des Anspruchs 1 und mit den Merkmalen des Anspruchs 12. Weiterbildungen und vorteilhafte Ausgestaltungen der Erfindung sind in den jeweils nachgeordneten Ansprüchen angegeben.

Die Rohrverschraubung, insbesondere für Lebensmittel- und Chemieanwendungen, insbesondere nach DIN 11851, mit einem einen ersten Rohrabschnitt bildenden Gewindestutzen und einem einen zweiten Rohrabschnitt bildenden Kegelstutzen, bei dem die Rohrabschnitte mit deren freien Enden bestimmungsgemäß fluchtend zueinander ausgerichtet sind, bei dem der Gewindestutzen an seinem freien Ende eine flanschartige Verbreiterung aufweist, die flanschartige Verbreiterung einen stirnseitig entlang ihres Umfangs, insbesondere entlang ihres äußeren Umfangs, gegenüber dem freien Ende des Rohrabschnitts des Gewindestutzens vorkragenden Rohrverbindungsabschnitt ausbildet, der Rohrverbindungsabschnitt der flanschartigen Verbreiterung innenseitig eine Kegelstutzenführungsfläche aufweist und die flanschartige Verbreiterung außenseitig mit einem Außengewinde versehen ist, bei dem der Kegelstutzen an seinem freien Ende einen Flansch mit sich in Richtung des freien Endes des Rohrabschnitts des Kegelstutzens konisch verjüngender Anlagefläche aufweist, mit einer den Flansch des Kegelstutzen hintergreifenden Überwurfmutter, die ein mit dem Außengewinde des Gewindestutzens in Eingriff bringbares Innengewinde aufweist, und mit wenigstens einer zwischen die freien Enden der Rohrabschnitte eingelegten, diese zueinander abdichtenden Dichtung, zeichnet sich erfindungsgemäß dadurch aus, dass zwischen einer stirnseitigen Endfläche des vorkragenden Rohrverbindungsabschnitts des Gewindestutzens und einer dem freien Ende des Rohrabschnitts des Gewindestutzens zugewandten Anschlagfläche der Überwurfmutter ein Abstandshalter angeordnet ist.

Durch den Abstandshalter ist erreicht, dass der Gewindestutzen und der Kegelstutzen bei maximal angezogener Überwurfmutter in einem definierten Abstand zueinander angeordnet sind. Der Kegelstutzen wird dabei nur mit begrenzter Kraft gegen die zwischen die Rohrabschnitte eingelegte Dichtung gedrückt. Die Dichtung kann dann entsprechend dem definierten Abstand nur soweit komprimiert werden, dass diese die Rohrverschraubung zwar abdichtet aber nicht in den Strömungsquerschnitt der bestimmungsgemäß fluchtend zueinander ausgerichteten Rohrabschnitte hineingedrückt wird oder anderweitig in den Strömungsquerschnitt der fluchtend zueinander ausgerichteten Rohrabschnitte hineinragt.

Nach einer ersten Weiterbildung ist der Abstandshalter ein Ringkörper, der die sich konisch verjüngende Anlagefläche des Kegelstutzens entlang ihres äußeren Umfangs vollständig umgreift und eine gleichmäßige Kraftverteilung zwischen dem Gewindestutzen und dem Kegelstutzen von auf die Rohrverschraubung wirkenden Kräften bewirkt.

Der Abstandshalter weist dazu in Richtung einer Mittenachse bzw. Längsachse der Rohrabschnitte vorteilhafterweise wenigstens eine innenseitige Kegelstutzenanlagefläche auf. Mit dieser Kegelstutzenanlagefläche liegt der Abstandshalter bestimmungsgemäß an der konischen Anlagefläche des Kegelstutzens an, wobei zwischen dem Abstandshalter und dem Kegelstutzen eine möglichst großflächige Verbindungsfläche geschaffen ist. Auf die Rohrverschraubung wirkende Kräfte können so besonders gleichmäßig aufgefangen und ausgeglichen werden.

Die Kegelstutzenanlagefläche ist vorteilhafterweise derart geformt, dass sich diese wie die konische Anlagefläche des Kegelstutzens in Richtung des Gewindestutzens konisch verjüngt. Insbesondere weisen sowohl die Kegelstutzenanlagefläche des Abstandshalters wie auch die sich konisch verjüngende Anlagefläche des Kegelstutzens einen gleichen Anstellwinkel ihrer Kegelmantelflächen zu der gemeinsamen Mittenachse bzw. Längsachse der miteinander verbundenen Rohrabschnitte auf. Gleiche Anstellwinkel der Kegelmantelflächen führen dabei zu einer größtmöglichen Verbindungsfläche, das heißt vollflächigen Anlage der dafür vorgesehenen Flächen aneinander, zwischen dem Kegelstutzen und dem Abstandshalter.

Die Position des Abstandshalters auf der sich konisch verjüngenden Anlagefläche des Kegelstutzens wird weiterhin durch dessen kleinsten Innendurchmesser und den größten Außendurchmesser der konisch geformten Anlagefläche des Kegelstutzens definiert. Vorteilhafterweise ist der weiteste Innendurchmesser der Kegelstutzenanlagefläche zudem gleich dem weitesten Außendurchmesser der sich konisch verjüngenden Anlagefläche des Kegelstutzens. Der Abstandshalter sitzt dann bei zusammengesetzten Rohrabschnitten der Rohrverschraubung auf dem Bereich des Kegelstutzens mit dessen größter Weite auf, so dass die Anschlagfläche der aufgeschraubten Überwurfmutter sowohl an dem Abstandshalter als auch zumindest einem Abschnitt einer Flanschrückseite des Kegelstutzens anliegt. Die Flanschrückseite bildet dabei die von dem freien Ende des Kegelstutzens abgewandte Fläche des Flansches, an den die Überwurfmutter bestimmungsgemäß anschlägt.

Der Abstandshalter weist nach einer nächsten Weiterbildung zumindest abschnittsweise zueinander parallele Stützflächen auf, von denen eine erste mit der stirnseitigen Endfläche des Gewindestutzens in Anlage zu bringen ist und eine zweite mit der Anschlagfläche der Überwurfmutter in Anlage zu bringen ist. Auf den Abstandshalter durch das Festziehen der Überwurfmutter in Längserstreckung der zueinander fluchtend ausgerichteten Rohrabschnitte wirkende Kräfte werden somit in rechtwinklig zu den Kräften ausgerichtete Flächen, die Stützflächen, eingeleitet. Insbesondere sind die Stützflächen des Abstandshalters, die stirnseitige Endfläche und die Anschlagfläche der Überwurfmutter dabei in wenigstens einer radial zu einer Mittenachse der Rohrabschnitte aufgespannten Ebene angeordnet.

Die mit der Anschlagfläche der Überwurfmutter in Anlage zu bringende Stützfläche ist bei bestimmungsgemäß miteinander verbundenen Rohrabschnitten vorteilhafterweise in einer Ebene mit oder parallel zu der Flanschrückseite angeordnet. Die Überwurfmutter kann dann eine ebene Anschlagfläche aufweisen, welche besonders einfach und günstig zu fertigen ist. Diese drückt mit der an dem Abstandshalter und dem Flansch anliegenden Anschlagfläche somit gleichermaßen gegen den Flansch des Kegelstutzens wie auch den Abstandshalter.

Bei der bekannten Milchrohrverschraubung gemäß DIN 11851 liegen die sich konisch verjüngende Anlagefläche des Kegelstutzens und die Kegelstutzenführungsfläche des Gewindestutzens, welche gleichermaßen konisch geformt ist, bei miteinander verbundenen Rohrabschnitten flächig an einander an und bewirken dadurch eine Zentrierung der Rohrabschnitte zueinander. Durch den erfindungsgemäßen Abstandshalter sind die sich konisch verjüngende Anlagefläche und die Kegelstutzenführungsfläche auch bei aufgeschraubter Überwurfmutter jedoch regelmäßig beabstandet zueinander angeordnet.

Um die beiden Rohrabschnitte des Gewindestutzens und des Kegelstutzens auf einfache Weise fluchtend zueinander ausrichten und zentrieren zu können, ist nach einer anderen Weiterbildung vorgesehen, dass der Abstandshalter wenigstens einen zumindest abschnittsweise in einen zwischen der Kegelstutzenführungsfläche des Rohrverbindungsabschnitts und der sich konisch verjüngenden Anlagefläche des Kegelstutzens ausgebildeten Spalt hineinragenden Zentrierkragen aufweist. Der Zentrierkragen stellt sicher, dass die sich konisch verjüngende Anlagefläche des Kegelstutzens und die Kegelstutzenführungsfläche des Gewindestutzens über den Zentrierkragen mittelbar entlang ihres Umfangs miteinander in Kontakt stehen und sich somit beim Verbinden der Rohrabschnitte zueinander zentriert ausrichten.

In weiterer Ausgestaltung bildet der Zentrierkragen dementsprechend mit seiner dem Kegelstutzen bestimmungsgemäß zugewandten Seite einen Teil der Kegelstutzenanlagefläche aus, der an der sich konisch verjüngenden Anlagefläche des Kegelstutzens anliegt, insbesondere vollflächig anliegt. Weiter ist vorgesehen, dass der Zentrierkragen mit seiner von dem Kegelstutzen abgewandten Seite bestimmungsgemäß an der Kegelstutzenführungsfläche des Gewindestutzens anliegt, insbesondere vollflächig anliegt.

Der Zentrierkragen kann dabei durch ein durchgehendes, insbesondere ringförmiges, Teil an dem Abstandshalter gebildet sein oder ein durchgehender, insbesondere ringförmiger, Abschnitt des Abstandshalters sein. Weiter können sich aber auch einzelne Laschen, Vorsprünge oder dergleichen als Zentrierkragen eignen, die in den Spalt zwischen der sich konisch verjüngenden Anlagefläche des Kegelstutzens und der Kegelstutzenführungsfläche des Gewindestutzens hineinragen. Ein aus einzelnen Teilen, wie Laschen, Vorsprünge oder der Gleichen, gebildeter Zentrierkragen muss lediglich sicherstellen, dass die konische Anlagefläche des Kegelstutzens und die Kegelstutzenführungsfläche entlang deren in Kontakt zu bringender Bereiche gleichmäßig zueinander abgestützt sind.

Damit die Dichtung korrekt zwischen den Rohrabschnitten eingesetzt wird, ist nach einer Weiterbildung vorgesehen, dass die flanschartige Verbreiterung des Gewindestutzens an der dem Kegelstutzen zugewandten Stirnseite des freien Endes eine Dichtungsnut, insbesondere eine umlaufende Dichtungsnut, aufweist. In der Dichtungsnut wird die eingesetzte Dichtung selbsttätig gehalten und ist in vorbestimmter Weise zu den freien Enden der Rohrabschnitte und dem Strömungsquerschnitt der miteinander verbundenen Rohrabschnitte, das heißt nicht in den Strömungsquerschnitt hineinragend, ausgerichtet.

Die Dichtung ist dabei in weiterer Ausgestaltung in einem Bereich anordenbar, insbesondere angeordnet, der sich von einer rohrseitig, das heißt von der Mittenachse bzw. Längsachse der Rohrabschnitte ausgehend betrachtet, äußeren Begrenzungswand der Dichtungsnut bis zu einer den Strömungsquerschnitt der beiden Rohrabschnitte begrenzenden Innenwand der Rohrabschnitte erstreckt. Der erfindungsgemäße Abstandshalter ist damit nach einer Weiterbildung mit Abstand zu der Dichtung angeordnet. Die Dichtungsnut und die Dichtung können damit denen der herkömmlichen Milchrohrverschraubung gemäß DIN 11851 entsprechen, so dass für die erfindungsgemäße Rohrverschraubung mit Vorteil am Markt in unterschiedlichsten Ausführungen und Materialien erhältliche Dichtungen verwendet werden können. Dies betrifft insbesondere auch Lagerbestände, wodurch eine besonders kostengünstige Implementierung der Erfindung mit all ihren Vorteilen in bestehende Anlagen möglich ist. Auch müssen bestehende Anlagen nicht umgerüstet werden, um den Abstandshalter zu einzusetzen.

Die Erfindung betrifft weiter auch einen vorgenannten Abstandshalter für eine Rohrverschraubung, insbesondere für Lebensmittel- und Chemieanwendungen, insbesondere nach DIN 11851. Der Abstandshalter kann dann in bestehende Anlagen und Systeme integriert werden, um diese nachzurüsten. Wesentliche Merkmale des Abstandshalters sind bereits in Zusammenhang mit der Rohrverschraubung beschrieben. Der Abstandshalter ist vorteilhafterweise durch einen Ringkörper gebildet. Dieser kann nach einer Weiterbildung in Richtung seiner Mittenachse, insbesondere der Mittenachse des Ringkörpers, wenigstens eine innenseitige Kegelstutzenanlagefläche aufweisen. Diese Kegelstutzenanlagefläche weist in weiterer Ausgestaltung eine konisch zulaufende Verjüngung auf.

Weiter kann der erfindungsgemäße Abstandshalter zumindest abschnittsweise zueinander parallele Stützflächen aufweisen, die insbesondere in wenigstens einer radial zu der Mittenachse des Abstandshalters aufgespannten Ebene angeordnet sind. Von den Stützflächen ist eine erste mit der stirnseitigen Endfläche des vorgenannten Gewindestutzens in Anlage zu bringen und eine zweite mit der Anschlagfläche der vorgenannten Überwurfmutter in Anlage zu bringen.

Nach einer nächsten Weiterbildung weist der Abstandshalter zudem wenigstens einen Zentrierkragen auf. Der Zentrierkragen kann in weiterer Ausgestaltung in Verlängerung der Kegelstutzenanlagefläche einen Teil der Kegelstutzenanlagefläche ausbilden.

Ein Ausführungsbeispiel der Erfindung, aus dem sich weitere erfindungswesentliche Merkmale ergeben können, ist in der Zeichnung dargestellt. Gleiche Teile sind in allen Figuren der Zeichnung mit gleichen Bezugszeichen versehen. Es zeigen:
- Fig. 1:: einen Längsschnitt durch eine erfindungsgemäße Rohrverschraubung entlang dessen Längsachse; und
- Fig. 2:: eine perspektivische Darstellung eines erfindungsgemäßen Abstandshalters.

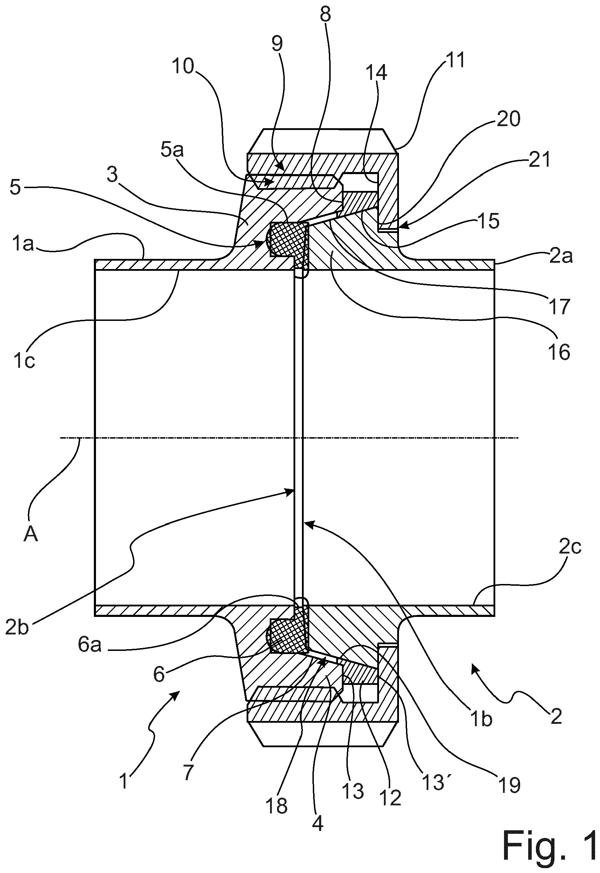

Aus Fig. 1 ist ein einen ersten Rohrabschnitt 1a bildender Gewindestutzen 1 und ein einen zweiten Rohrabschnitt 2a bildender Kegelstutzen 2 zu entnehmen, die mit jeweils einem freien Ende 1b, 2b der Rohrabschnitte 1a, 2a stirnseitig aneinander gesetzt sind und mit ihren Mittenachsen (A) bzw. Längsachsen fluchtend zueinander ausgerichtet sind. Der einen ersten Rohrabschnitt 1a bildende Gewindestutzen 1 weist an seinem freien Ende 1b eine flanschartige Verbreiterung 3 auf, die stirnseitig entlang ihres äußeren Umfangs einen gegenüber dem freien Ende 1b des Rohrabschnitts 1a des Gewindestutzens 1 in Richtung des Kegelstutzens 2 vorkragenden Rohrverbindungsabschnitt 4 ausbildet. Zwischen dem vorkragenden Rohrverbindungsabschnitt 4 und dem Rohrabschnitt 1a weist die flanschartige Verbreiterung 3 eine umlaufende Dichtungsnut 5 auf. In die Dichtungsnut 5 ist eine Dichtung 6 eingesetzt, die sich von einer rohrseitig, das heißt von einer Mittenachse (A) bzw. Längsachse der Rohrabschnitte 1a, 2a ausgehend betrachtet, äußeren Begrenzungswand 5a der Dichtungsnut 5 mit einer zwischen den freien Enden 1b, 2b angeordneten Dichtungslippe 6a bis an einen durchströmbaren Bereich der Rohrabschnitte 1a, 2a erstreckt und in einer Ebene mit einer den Strömungsquerschnitt der Rohrabschnitte 1a, 2a begrenzenden Innenwand 1c, 2c abschließt.

Der Rohrverbindungsabschnitt 4 der flanschartigen Verbreiterung 3 weist weiter eine Kegelstutzenführungsfläche 7 auf, die innenseitig an dem Rohrverbindungsabschnitt 4 ausgebildet ist. Diese Kegelstutzenführungsfläche 7 erstreckt sich von der äußeren Begrenzungswand 5a der Dichtungsnut 5 bis zu einer stirnseitigen Endfläche 8 des Rohrverbindungsabschnitts 4. Ausgehend von der stirnseitigen Endfläche 8 weist die Kegelstutzenführungsfläche 7 in Richtung der Dichtungsnut 5 eine sich gleichmäßig konisch verengende Verjüngung auf.

Außenseitig ist die flanschartige Verbreiterung 3 mit einem Außengewinde 9 versehen, in das ein Innengewinde 10 einer aufgeschraubten Überwurfmutter 11 eingreift. Zwischen der Überwurfmutter 11 und der stirnseitigen Endfläche 8 ist ein Abstandshalter 12 angeordnet. Der Abstandshalter 12 weist zueinander parallele Stützflächen 13, 13` auf von denen die erste Stützfläche 13 an der stirnseitigen Endfläche 8 anliegt und die zweite Stützfläche 13' an einer dem freien Ende 1b des Rohrabschnitts 1a des Gewindestutzens 1 zugewandten Anschlagfläche 14 der Überwurfmutter 11 anliegt.

Die stirnseitige Endfläche 8, die Stützflächen 13, 13' und die Anschlagfläche 14 sind dabei jeweils in einer Ebene radial zu der Längsachse der miteinander verbundenen Rohrabschnitte 1a, 2a angeordnet. Der Abstandshalter 12 ist somit durch die angezogene Überwurfmutter 11 zwischen der stirnseitigen Endfläche 8 und der Anschlagfläche 14 eingespannt.

Weiter weist der Abstandshalter innenseitig eine sich in Richtung des Rohrabschnitts 1a konisch verjüngende Kegelstutzenanlagefläche 15 auf. Diese Kegelstutzenanlagefläche 15 weist eine größte Weite auf, die gleich der größten Weite eines dem freien Ende 2b des Kegelstutzens 2 zugeordneten Flansches 16 ist. Der Flansch 16 weist ausgehend von seiner größten Weite eine sich in Richtung des freien Endes 1b des Rohrabschnitts 1a konisch verjüngende Anlagefläche 17 auf. Die sich konisch verjüngende Anlagefläche 17 und die Kegelstutzenanlagefläche 15 weisen, wie auch die Kegelstutzenführungsfläche 7, einen gleichen Anstellwinkel von deren Kegelmantelflächen zu der Längsachse bzw. Mittenachse (A) der Rohrabschnitte 1a, 2a auf. Die sich konisch verjüngende Anlagefläche 17 und die Kegelstutzenanlagefläche 15 liegen damit vollflächig aneinander an. Zudem ist dadurch, dass die Kegelstutzenanlagefläche 15 und der Flansch 16 eine gleiche größte Weite aufweisen, erreicht, dass die Anschlagfläche 14 gleichermaßen gegen den Abstandshalter 12 und den Kegelstutzen 2 drückt.

Zwischen der Kegelstutzenführungsfläche 7 und der sich konisch verjüngenden Anlagefläche 17 ist ein Spalt 18 ausgebildet. In diesen Spalt 18 erstreckt sich ein Zentrierkragen 19 des Abstandshalters 12. Dieser bildet mit seiner dem Kegelstutzen 2 zugewandten Seite einen Teil der Kegelstutzenanlagefläche 15 aus. Mit seiner von dem Kegelstutzen 2 abgewandten Seite liegt der Zentrierkragen 19 vollflächig an dem Teil der Kegelstutzenführungsfläche 7 an, der sich von der stirnseitigen Endfläche beginnend in Richtung der Dichtungsnut 5 erstreckt. Über den Zentrierkragen 19 des Abstandshalters 12 stehen somit die Kegelstutzenführungsfläche 7 und die sich konisch verjüngende Anlagefläche 17 mittelbar in Kontakt zueinander, wobei deren Positionen zueinander festgelegt sind.

Indem die Positionen der Kegelstutzenführungsfläche 7 und der sich konisch verjüngenden Anlagefläche 17 zueinander festgelegt sind, ist auf einfache Weise sichergestellt, dass der Gewindestutzen 1 und der Kegelstutzen 2 fluchtend zueinander ausrichtbar sind. Weiter ist sichergestellt, dass auf die Dichtung 6 nur ein begrenzter Druck ausgeübt wird und die Dichtungslippe 6a somit nicht in den Strömungsquerschnitt der Rohrabschnitte 1a, 2a hineinragt.

Der Flansch 16 des Kegelstutzens 2 weist an seiner Flanschrückseite 20, die mit der Anschlagfläche 14 in Anlage gebracht ist, eine Stufe 21 auf, die einen mit der Anschlagfläche 14 in Anlage gebrachten Teil dieser begrenzt.

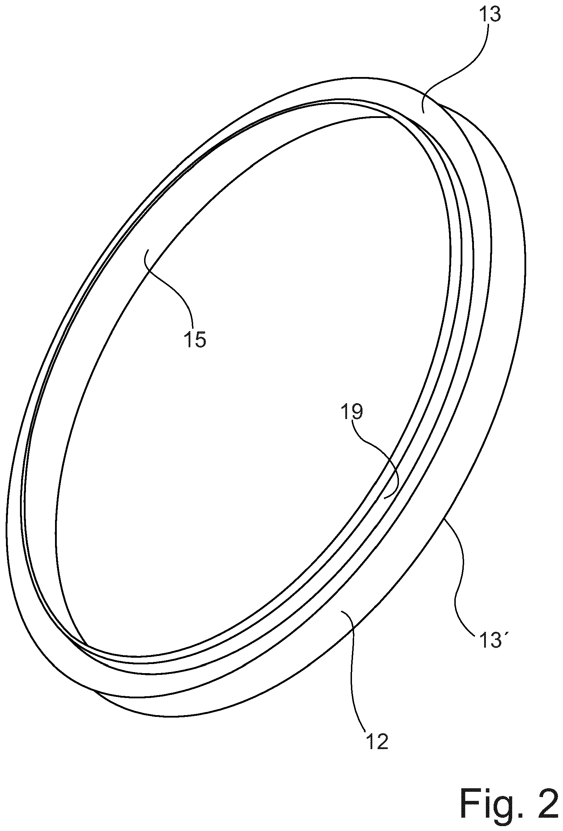

In Figur 2 ist nochmal der erfindungsgemäße Abstandshalter 12 gezeigt, wobei insbesondere ersichtlich ist, dass dieser durch einen Ringkörper gebildet ist und sich die Kegelstutzenanlagefläche 15, der Zentrierkragen 19 sowie die Stützflächen 13, 13' vollständig entlang des Umfangs des Ringkörpers erstrecken.

## Patentansprüche

1. Rohrverschraubung, insbesondere für Lebensmittel- und Chemieanwendungen, insbesondere nach DIN 11851, mit einem einen ersten Rohrabschnitt (1a) bildenden Gewindestutzen (1) und einem einen zweiten Rohrabschnitt (2a) bildenden Kegelstutzen (2), bei dem die Rohrabschnitte (1a, 2a) mit deren freien Enden (1b, 2b) bestimmungsgemäß fluchtend zueinander ausgerichtet sind, bei dem der Gewindestutzen (1) an seinem freien Ende eine flanschartige Verbreiterung (3) aufweist, die flanschartige Verbreiterung (3) einen stirnseitig entlang ihres Umfangs, insbesondere entlang ihres äußeren Umfangs, gegenüber dem freien Ende des Rohrabschnitts (1b) des Gewindestutzens (1) vorkragenden Rohrverbindungsabschnitt (4) ausbildet, der Rohrverbindungsabschnitt (4) der flanschartigen Verbreiterung (3) innenseitig eine Kegelstutzenführungsfläche (7) aufweist und die flanschartige Verbreiterung (3) außenseitig mit einem Außengewinde (9) versehen ist, bei dem der Kegelstutzen (2) an seinem freien Ende einen Flansch (16) mit sich in Richtung des freien Endes (2b) des Rohrabschnitts (2a) des Kegelstutzens (2) konisch verjüngender Anlagefläche (7) aufweist, mit einer den Flansch (16) des Kegelstutzen hintergreifenden Überwurfmutter (11), die ein mit dem Außengewinde (9) des Gewindestutzens (1) in Eingriff bringbares Innengewinde (10) aufweist, und mit wenigstens einer zwischen die freien Enden (1b, 2b) der Rohrabschnitte (1a, 2a) eingelegten, diese zueinander abdichtenden Dichtung (6),
**dadurch gekennzeichnet,**
**dass** zwischen einer stirnseitigen Endfläche (8) des vorkragenden Rohrverbindungsabschnitts (4) des Gewindestutzens (1) und einer dem freien Ende (1b) des Rohrabschnitts (1a) des Gewindestutzens (1) zugewandten Anschlagfläche (14) der Überwurfmutter (11) ein Abstandshalter (12) angeordnet ist.

2. Rohrverschraubung nach Anspruch 1, **dadurch gekennzeichnet, dass** der Abstandshalter (12) ein Ringkörper ist, der die sich konisch verjüngende Anlagefläche (17) des Kegelstutzens (2) entlang ihres äußeren Umfangs vollständig umgreift.

3. Rohrverschraubung nach einem der Ansprüche 1 oder 2, **dadurch gekennzeichnet, dass** der Abstandshalter (12) in Richtung einer Längsachse der Rohrabschnitte (1a, 2a) wenigstens eine innenseitige Kegelstutzenanlagefläche (15) aufweist.

4. Rohrverschraubung nach Anspruch 3, **dadurch gekennzeichnet, dass** sich die Kegelstutzenanlagefläche (15) in Richtung des Gewindestutzens (1) konisch verjüngt.

5. Rohrverschraubung nach einem der Ansprüche 1 bis 4, **dadurch gekennzeichnet, dass** der Abstandshalter (12) zumindest abschnittsweise zueinander parallele Stützflächen (13, 13`) aufweist, von denen eine erste mit der stirnseitigen Endfläche (8) des Gewindestutzens (1) in Anlage zu bringen ist und eine zweite mit der Anschlagfläche (14) der Überwurfmutter (11) in Anlage zu bringen ist.

6. Rohrverschraubung nach einem der Ansprüche 1 bis 5, **dadurch gekennzeichnet, dass** der Abstandshalter (12) wenigstens einen zumindest abschnittsweise in einen zwischen der Kegelstutzenführungsfläche (7) des Rohrverbindungsabschnitts (4) und der sich konisch verjüngenden Anlagefläche (17) des Kegelstutzens (2) ausgebildeten Spalt hineinragenden Zentrierkragen (19) aufweist.

7. Rohrverschraubung nach Anspruch 6, **dadurch gekennzeichnet, dass** der Zentrierkragen (19) mit seiner dem Kegelstutzen (2) bestimmungsgemäß zugewandten Seite einen Teil der Kegelstutzenanlagefläche (15) ausbildet und an der sich konisch verjüngenden Anlagefläche (17) des Kegelstutzens (2) anliegt.

8. Rohrverschraubung nach einem der Ansprüche 6 oder 7, **dadurch gekennzeichnet, dass** der Zentrierkragen (19) mit seiner von dem Kegelstutzen (2) abgewandten Seite bestimmungsgemäß an der Kegelstutzenführungsfläche (7) anliegt.

9. Rohrverschraubung nach einem der Ansprüche 1 bis 8, **dadurch gekennzeichnet, dass** die flanschartige Verbreiterung (3) des Gewindestutzens (1) an der dem Kegelstutzen (2) zugewandten Stirnseite des freien Endes eine Dichtungsnut (5), insbesondere eine umlaufende Dichtungsnut (5), aufweist.

10. Rohrverschraubung nach Anspruch 9, **dadurch gekennzeichnet, dass** die Dichtung (6) in einem Bereich anordenbar, insbesondere angeordnet, ist, der sich von einer rohrseitig, das heißt von einer Mittenachse (A) der Rohrabschnitte (1a, 2a) ausgehend betrachtet, äußeren Begrenzungswand (5a) der Dichtungsnut (5) bis zu einer einen Strömungsquerschnitt der beiden Rohrabschnitte (1a, 2a) begrenzenden Innenwand (1c, 2c) der Rohrabschnitte (1a, 2a) erstreckt..

11. Rohrverschraubung nach einem der Ansprüche 1 bis 10, **dadurch gekennzeichnet, dass** der Abstandshalter (12) mit Abstand zu der Dichtung (6) angeordnet ist.

12. Abstandshalter (12) für eine Rohrverschraubung, insbesondere für Lebensmittelund Chemieanwendungen, insbesondere nach DIN 11851,
**dadurch gekennzeichnet,**
**dass** der Abstandshalter (12) gemäß einem der Ansprüche 1 bis 11 ausgebildet ist.

## Geänderte Patentansprüche

### Geänderte Patentansprüche gemäss Regel 137(2) EPÜ.

1. Rohrverschraubung, insbesondere für Lebensmittel- und Chemieanwendungen, insbesondere nach DIN 11851, mit einem einen ersten Rohrabschnitt (1a) bildenden Gewindestutzen (1) und einem einen zweiten Rohrabschnitt (2a) bildenden Kegelstutzen (2), bei der die Rohrabschnitte (1a, 2a) mit deren freien Enden (1b, 2b) bestimmungsgemäß fluchtend zueinander ausgerichtet sind, bei der der Gewindestutzen (1) an seinem freien Ende eine flanschartige Verbreiterung (3) aufweist, die flanschartige Verbreiterung (3) einen stirnseitig entlang ihres Umfangs, insbesondere entlang ihres äußeren Umfangs, gegenüber dem freien Ende des Rohrabschnitts (1b) des Gewindestutzens (1) vorkragenden Rohrverbindungsabschnitt (4) ausbildet, der Rohrverbindungsabschnitt (4) der flanschartigen Verbreiterung (3) innenseitig eine Kegelstutzenführungsfläche (7) aufweist und die flanschartige Verbreiterung (3) außenseitig mit einem Außengewinde (9) versehen ist, bei der der Kegelstutzen (2) an seinem freien Ende einen Flansch (16) mit sich in Richtung des freien Endes (2b) des Rohrabschnitts (2a) des Kegelstutzens (2) konisch verjüngender Anlagefläche (7) aufweist, mit einer den Flansch (16) des Kegelstutzen hintergreifenden Überwurfmutter (11), die ein mit dem Außengewinde (9) des Gewindestutzens (1) in Eingriff bringbares Innengewinde (10) aufweist, und mit wenigstens einer zwischen die freien Enden (1b, 2b) der Rohrabschnitte (1a, 2a) eingelegten, diese zueinander abdichtenden Dichtung (6),
**dadurch gekennzeichnet,**
**dass** zwischen einer stirnseitigen Endfläche (8) des vorkragenden Rohrverbindungsabschnitts (4) des Gewindestutzens (1) und einer dem freien Ende (1b) des Rohrabschnitts (1a) des Gewindestutzens (1) zugewandten Anschlagfläche (14) der Überwurfmutter (11) ein Abstandshalter (12) angeordnet ist.

2. Rohrverschraubung nach Anspruch 1, **dadurch gekennzeichnet, dass** der Abstandshalter (12) ein Ringkörper ist, der die sich konisch verjüngende Anlagefläche (17) des Kegelstutzens (2) entlang ihres äußeren Umfangs vollständig umgreift.

3. Rohrverschraubung nach einem der Ansprüche 1 oder 2, **dadurch gekennzeichnet, dass** der Abstandshalter (12) in Richtung einer Längsachse der Rohrabschnitte (1a, 2a) wenigstens eine innenseitige Kegelstutzenanlagefläche (15) aufweist.

4. Rohrverschraubung nach Anspruch 3, **dadurch gekennzeichnet, dass** sich die Kegelstutzenanlagefläche (15) in Richtung des Gewindestutzens (1) konisch verjüngt.

5. Rohrverschraubung nach einem der Ansprüche 1 bis 4, **dadurch gekennzeichnet, dass** der Abstandshalter (12) zumindest abschnittsweise zueinander parallele Stützflächen (13, 13') aufweist, von denen eine erste mit der stirnseitigen Endfläche (8) des Gewindestutzens (1) in Anlage zu bringen ist und eine zweite mit der Anschlagfläche (14) der Überwurfmutter (11) in Anlage zu bringen ist.

6. Rohrverschraubung nach einem der Ansprüche 1 bis 5, **dadurch gekennzeichnet, dass** der Abstandshalter (12) wenigstens einen zumindest abschnittsweise in einen zwischen der Kegelstutzenführungsfläche (7) des Rohrverbindungsabschnitts (4) und der sich konisch verjüngenden Anlagefläche (17) des Kegelstutzens (2) ausgebildeten Spalt hineinragenden Zentrierkragen (19) aufweist.

7. Rohrverschraubung nach Anspruch 6, **dadurch gekennzeichnet, dass** der Zentrierkragen (19) mit seiner dem Kegelstutzen (2) bestimmungsgemäß zugewandten Seite einen Teil der Kegelstutzenanlagefläche (15) ausbildet und an der sich konisch verjüngenden Anlagefläche (17) des Kegelstutzens (2) anliegt.

8. Rohrverschraubung nach einem der Ansprüche 6 oder 7, **dadurch gekennzeichnet, dass** der Zentrierkragen (19) mit seiner von dem Kegelstutzen (2) abgewandten Seite bestimmungsgemäß an der Kegelstutzenführungsfläche (7) anliegt.

9. Rohrverschraubung nach einem der Ansprüche 1 bis 8, **dadurch gekennzeichnet, dass** die flanschartige Verbreiterung (3) des Gewindestutzens (1) an der dem Kegelstutzen (2) zugewandten Stirnseite des freien Endes eine Dichtungsnut (5), insbesondere eine umlaufende Dichtungsnut (5), aufweist.

10. Rohrverschraubung nach Anspruch 9, **dadurch gekennzeichnet, dass** die Dichtung (6) in einem Bereich anordenbar, insbesondere angeordnet, ist, der sich von einer rohrseitig, das heißt von einer Mittenachse (A) der Rohrabschnitte (1a, 2a) ausgehend betrachtet, äußeren Begrenzungswand (5a) der Dichtungsnut (5) bis zu einer einen Strömungsquerschnitt der beiden Rohrabschnitte (1a, 2a) begrenzenden Innenwand (1c, 2c) der Rohrabschnitte (1a, 2a) erstreckt..

11. Rohrverschraubung nach einem der Ansprüche 1 bis 10, **dadurch gekennzeichnet, dass** der Abstandshalter (12) mit Abstand zu der Dichtung (6) angeordnet ist.

12. Abstandshalter (12) für eine Rohrverschraubung für Lebensmittel- und Chemieanwendungen nach **DIN** 11851,
**dadurch gekennzeichnet,**
**dass** der Abstandshalter (12) gemäß einem der Ansprüche 1 bis 11 ausgebildet ist.
